# EUROPÄISCHE PATENTSCHRIFT

(11) **EP 2 746 831 B1**
(45) Veröffentlichungstag und Bekanntmachung des Hinweises auf die Patenterteilung: **01.08.2018**
(21) Anmeldenummer: 13192364.1
(22) Anmeldetag: 11.11.2013
(51) Int. Cl.: G02B 21/26

(54) **Digitales Mikroskopsystem**
Digital microscope system
Système de microscope numérique

(30) Priorität: 18.12.2012 DE 102012223533
(43) Veröffentlichungstag der Anmeldung: 25.06.2014
(73) Patentinhaber: Carl Zeiss Microscopy GmbH, 07745 Jena (DE)
(72) Erfinder: Tandler, Hans, 07745 Jena (DE); Knoblich, Johannes, 07747 Jena (DE); Winterot, Johannes, 07745 Jena (DE)
(74) Vertreter: Patentanwälte Geyer, Fehners & Partner mbB

(56) Entgegenhaltungen:
- DE-A1- 1 572 557
- JP-A- 2011 027 906
- US-A1- 2002 080 240
- US-A1- 2003 030 747
- DATABASE WPI Week 201107 Thomson Scientific, London, GB; AN 2011-A56027 XP002723194, -& JP 2011 007874 A (OLYMPUS OPTICAL CO LTD) 13. Januar 2011 (2011-01-13)
- "Amazon: Somikon Profi-Stativ für Mikroskop-Kameras", , 28. Oktober 2011 (2011-10-28), XP002723195, Gefunden im Internet: URL:http://www.amazon.de/Somikon-Profi-Sta tiv-f%C3%BCr-Mikroskop-Kameras/dp/B005PUX6 6A/ref=pd_sim_sbs_ce_15?ie=UTF8&refRID=021 0TZMZ511S6AP81ZNC [gefunden am 2014-04-10]
- "DigiMicro 2.0 Scale", , 1. Januar 2008 (2008-01-01), XP055113588, Gefunden im Internet: URL:http://dnt.de/data/download/item/52092 /DigiMicro2-0Scale-web.pdf [gefunden am 2014-04-10]
- "DigiMicro Scale Bedienungsanleitung", , 1. Januar 2008 (2008-01-01), XP055113590, Gefunden im Internet: URL:http://dnt.de/data/download/item/52092 /DigiMicroScale20.pdf [gefunden am 2014-04-10]
- "Next Generation 3D Digital Microscope Fast, Easy and High Quality Total Imaging Solutions KH-8700", , 9. Mai 2012 (2012-05-09), XP055113492, Gefunden im Internet: URL:http://www.hirox-europe.com/catalog/ca talog_pdf/new-KH8700_en.pdf [gefunden am 2014-04-10]
- "Mfg4 industry intersection Learning Lounge Schedule", , 8. Mai 2012 (2012-05-08), XP002723196, Gefunden im Internet: URL:http://www.mfg4event.com/2012/public/C ontent.aspx?ID=994&sortMenu=101005 [gefunden am 2014-04-10]

## Beschreibung

### Gebiet der Erfindung

Die Erfindung bezieht sich auf ein digitales Mikroskopsystem, umfassend ein oder mehrere Objektive, eine Tubusoptik, eine digitale Bildaufnahmeeinrichtung, ein Stativ, ein Halterung für eine Probe und eine Beleuchtungseinrichtung sowie optional mindestens einen Vergrößerungswechsler.

### Stand der Technik

Digitale Mikroskopsysteme an sich sind bekannt. Im Gegensatz zu konventionellen Lichtmikroskopen wird mit digitalen Mikroskopsystemen das Bild der zu untersuchende Probe nicht durch ein Okular betrachtet, sondern mit einer digitalen Bildaufnahmeeinrichtung zunächst optoelektronisch gewandelt und mittels einer Bildwiedergabeeinrichtung wieder visuell wahrnehmbar dargestellt - oder der Bildinhalt wird elektronisch ausgewertet. Dabei ist die Betrachtung und Auswertung nicht an den Ort der Bildaufnahme gebunden, sondern dank der Übertragungsmöglichkeit elektronischer Bildsignale unabhängig davon frei wählbar. So ist beispielsweise eine optimale Anpassung an die körperliche Konstitution eines Betrachters ebenso möglich wie die Bildübertragung über Kommunikationswege zu mehreren Betrachtungs- oder Auswertungsorten bzw. die Anpassung des Mikroskops an Beobachtungsaufgaben, die mit konventionellen Mikroskopen nicht zu lösen sind.

Kommerziell erhältliche digitale Mikroskope bzw. Mikroskopsysteme sind konstruktiv bestimmten Applikationen angepasst und daher meist unveränderbar als aufrechte oder inverse Mikroskope konzipiert. Die Umrüstung für wechselnde Einsatzfälle, die jeweils einen anderen Mikroskoptyp - aufrecht oder invers - erfordern, ist entweder überhaupt nicht oder nur mit unverhältnismäßig großem Aufwand möglich.

Als aufrecht im Sinne der nachfolgend beschriebenen Erfindung sollen Mikroskope gelten, bei denen das Objektiv von oben, d.h. zumindest im Wesentlichen in Schwerkraftrichtung auf die Probe blickt. Im Gegensatz dazu ist bei einem inversen Mikroskop das Objektiv unter dem Probentisch angebracht und blickt durch diesen hindurch auf die Probe. Inverse Mikroskope sind insbesondere für Untersuchungen an lebenden, z.B. in Kulturgefäßen eingeschlossenen Zellen geeignet. Ein digitales Mikroskopsystem gemäß dem Oberbegriff von Anspruch 1 ist aus der JP2011-27906 A und US2002/0080240 bekannt. Die JP2011-7874A beschreibt ein digitales Mikroskopsystem mit einer schwenkbaren optischen Baueinheit.

### Beschreibung der Erfindung

Von diesem Stand der Technik ausgehend liegt der Erfindung die Aufgabe zugrunde, ein digitales Mikroskopsystem der eingangs beschriebenen Art so weiterzuentwickeln, dass bei geringstem Aufwand eine Umrüstung und dadurch ein universeller Einsatz sowohl als aufrechtes als auch inverses Mikroskop möglich ist.

Erfindungsgemäß ist vorgesehen, dass
- ein oder mehrere Objektive, die Tubusoptik, die digitale Bildaufnahmeeinrichtung und die Beleuchtungseinrichtung zu einer kompakten optischen Baueinheit zusammengefasst sind, und
- Mittel vorhanden sind zum Verbinden der optischen Baueinheit mit dem Stativ in mehreren Verbindungsvarianten, die sich bezüglich der räumlichen Lage und Ausrichtung der optischen Baueinheit relativ zum Stativ und zur Probe unterscheiden.
Die räumliche Lage und Ausrichtung der optischen Baueinheit relativ zum Stativ und zur Probe entspricht in einer ersten Verbindungsvariante einem aufrechten Mikroskop und in einer zweiten Verbindungsvariante einem inversen Mikroskop.

Vorzugsweise weist das Stativ eine Geradführung für die optische Baueinheit auf, und es sind ineinandergreifende Antriebselemente an der Geradführung vorgesehen, die eine Positionsänderung der optischen Baueinheit am Stativ ermöglichen, und zwar insbesondere zum Zweck der Einstellung des Arbeitsabstandes zwischen Objektiv und Probe. Die Antriebselemente können beispielsweise als Zahnstange an der Stativsäule und Ritzel an der optischen Baueinheit ausgebildet sein oder in Form eines linearen Schrittmotors mit dem Stator am Stativ und einem oder mehreren Läufern an der optischen Baueinheit. Erfindungsgemäß ist die optische Baueinheit mit zwei Objektiven ausgestattet, die beide das gleiche optische Design haben. Dabei ist einem ersten Objektiv eine Arbeitsposition zugeordnet, bei der seine optisch Achse mit der optischen Achse der Tubusoptik einen Winkel von 90 Grad einschließt. Dem zweiten Objektiv ist eine Arbeitsposition zugeordnet, bei der seine optische Achse auf einer Geraden mit der optischen Achse der Tubusoptik liegt. Im gemeinsamen Schnittpunkt der optischen Achse der Objektive und der Tubusoptik ist ein Strahlteiler/Strahlvereiniger vorgesehen.

Vorzugsweise ist eine Einkopplung des Beleuchtungslichtes in den Abbildungsstrahlengang mittels des Strahlteilers/Strahlvereinigers vorgesehen, der sich im Schnittpunkt der optischen Achse der Objektive und der optischen Achse der Tubusoptik befindet.

Die Probenhalterung kann in Form eines in die Objektebene einschwenkbaren oder einschiebbaren Probentisches ausgebildet sein.

In einer weiteren denkbaren Ausführungsform des erfindungsgemäßen digitalen Mikroskopsystems ist ein Vergrößerungswechsler in den Abbildungsstrahlengang der optischen Baueinheit integriert. Der Vergrößerungswechsler weist axial verschiebbare und zu diesem Zweck vorzugsweise motorisch angetriebene optische Komponenten auf. Vom Erfindungsgedanken eingeschlossen ist auch die Integration mehrerer hintereinander angeordneter, optisch aufeinander und auf die übrigen Komponenten abgestimmter Vergrößerungswechsler.

Die Beleuchtungseinrichtung weist als Lichtquelle mindestens eine, vorzugsweise jedoch mehrere LED's auf, die separat ein- und ausschaltbar sind. Insbesondere zur Erzeugung von Dunkelfeldkontrast kann eine ringförmige Anordnung mehrerer LED's konzentrisch zur Lichteintrittsfläche des Objektivs vorhanden sein. Alternativ dazu kann auch eine ringförmige Licht abstrahlenden Fläche vorgesehen sein.

Die optische Baueinheit ist über Signalwege mit einer Ansteuer- und Bildauswerteeinrichtung und über Versorgungleitungen mit einer Energieversorgungseinrichtung verbunden.

Im Rahmen der Erfindung liegt es weiterhin, die Länge des Lichtweges in der optischen Baueinheit durch Kombination der Tubusoptik mit der Licht-Einspiegelung zu verkürzen. Ist die Tubusoptik zwei- oder mehrteilig aufgebaut und ein Teiler zwischen zwei positiven Teilbrennweiten der Tubusoptik eingefügt, kann ein Teil der Tubusoptik sowohl für die Beleuchtung als auch für die Abbildung genutzt werden. Diese Ausgestaltungsvariante erlaubt es, den ohnehin vorhandenen Bauraum der Tubusoptik effektiver zu nutzen. Der sonst erforderliche Bauraum für die Einspiegelung zwischen Objektiv und Tubus wird in dem Fall nicht benötigt. Ist dabei der Teiler als Prisma ausgeführt, muss im Design der Glasweg berücksichtigt werden. Bei Verwendung einer schräg im Strahlengang stehenden Teilerplatte ist die Objektbeobachtung vorzugsweise in Reflexion auszuführen, um Astigmatismus zu umgehen.

Ein in der beschriebenen Weise modular aufgebautes digitales Mikroskopsystem bietet die Möglichkeit der Verwendung sowohl als aufrechtes als auch inverses Mikroskop, wobei der wesentliche Vorteil darin besteht, dass in beiden Fällen ein- und dieselbe optische Baueinheit genutzt werden kann. Bei der aufrechten Konfiguration kann darüber hinaus die optische Baueinheit in zwei Varianten, nämlich sowohl in liegender als auch stehender Anordnung, verwendet und so optimal einer entsprechenden Applikation angepasst werden. Die optische Baueinheit ist kompakt aufgebaut, der Wechsel zwischen den beiden Verbindungsarten ist in einfacher Weise, vorzugsweise ohne Zuhilfenahme von Werkzeugen, von Hand ausführbar.

### Kurze Beschreibung der Zeichnungen

Die Erfindung wird nachfolgend anhand von Ausführungsbeispielen näher erläutert. In den zugehörigen Zeichnungen zeigen:
- Fig.1: ein Ausführungsbeispiel des erfindungsgemäßen Mikroskopsystems in einer aufrechten Konfiguration, bestehend aus einem Stativ, das eine Grundplatte und eine darauf stehende Stativsäule aufweist, und einer kompakten optischen Baueinheit, die zwei Objektive, einen Strahlteilers/Strahlvereiniger, eine Tubusoptik und eine digitale Bildaufnahmeeinrichtung umfasst,
- Fig.2: ein Ausführungsbeispiel des erfindungsgemäßen Mikroskopsystems in einer inversen Konfiguration, bestehend aus demselben Stativ und derselben optischen Baueinheit wie im Ausführungsbeispiel nach Fig.1,
- Fig.3: ein Ausführungsbeispiel des erfindungsgemäßen Mikroskopsystems in einer aufrechten Konfiguration, bestehend aus demselben Stativ und derselben optischen Baueinheit wie im Ausführungsbeispiel nach Fig.1, wobei jedoch die optische Baueinheit um 90 Grad in der Zeichenebene gedreht ist.
- Fig.4: ein Ausführungsbeispiel des erfindungsgemäßen Mikroskopsystems mit derselben optischen Baueinheit wie im Ausführungsbeispiel nach Fig.1, hier jedoch gekoppelt mit einer Schwenkvorrichtung zur wahlweise aufrechten oder inversen Konfiguration,
- Fig.5: eine Auswahl von Ausführungen der optischen Baueinheit,
- Fig.6: Ausführungsbeispiele für den Abbildungsstrahlengang in der optischen Baueinheit.

### Ausführliche Beschreibung der Zeichnungen

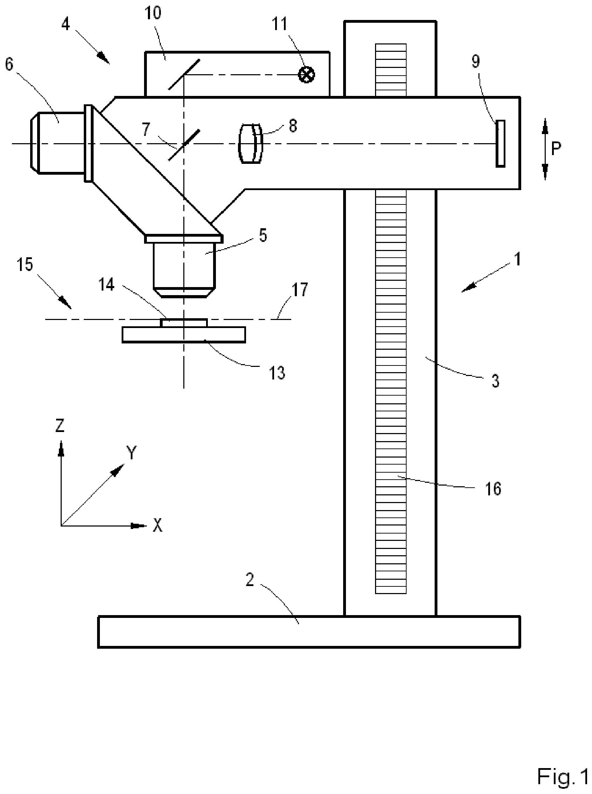

Fig.1 zeigt ein erstes Ausführungsbeispiel des erfindungsgemäßen Digitalmikroskops, im Wesentlichen bestehend aus
- einem Stativ 1, das eine Grundplatte 2 und eine darauf aufrecht stehende Stativsäule 3 aufweist,
- einer optischen Baueinheit 4, in der zwei Objektive 5 und 6, ein Strahlteiler/Strahlvereiniger 7, eine Tubusoptik 8, eine digitale Bildaufnahmeeinrichtung 9 und eine Beleuchtungseinrichtung 10 mit einer Lichtquelle 11 und einem Ablenkelement 12 kompakt zusammengefasst sind, und
- einem Probentisch 13, auf dem eine zu untersuchende Probe 14 mit definierter Ausrichtung zu einer Objektebene 15 abgelegt ist.

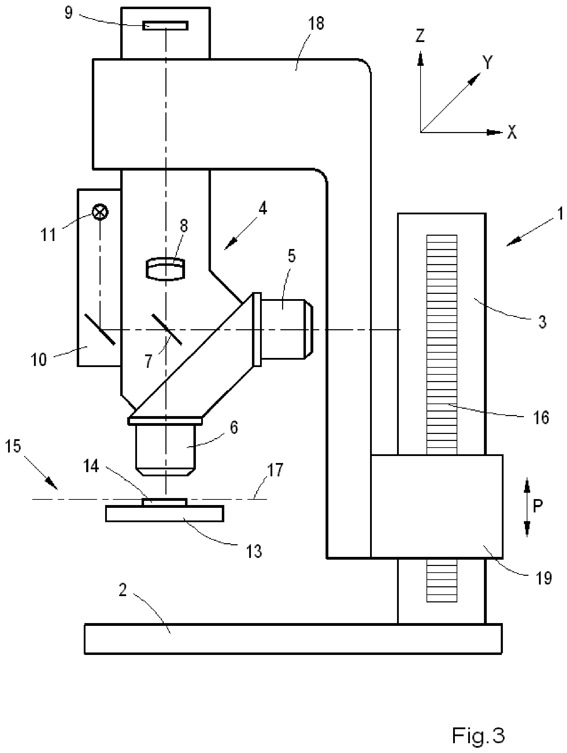

Die Objektive 5 und 6 haben erfindungsgemäß das gleiche optische Design, wobei sich das Objektiv 5 in der hier gezeigten Konfiguration allein in Arbeitsposition befindet, während die Benutzung des Objektivs 6 der in Fig.3 dargestellten Konfiguration vorbehalten ist. Als Lichtquelle 11 ist eine Anordnung aus einer oder mehreren LED's vorgesehen. Von dem beispielsweise als planparallele Platte ausgeführten Strahlteiler/Strahlvereiniger 7 wird das von Objektiv 5 aufgenommene Abbildungslicht um 90 Grad zur Tubusoptik 8 hin abgelenkt und von der Tubusoptik 8 auf die Sensorfläche der digitalen Bildaufnahmeeinrichtung 9 abgebildet.

Ein Lichteinfall durch das Objektiv 6 hindurch ist in dieser Konfiguration durch eine Objektivabdeckung, einen Shutter oder eine in den Strahlengang eingeschobene Blende (zeichnerisch nicht dargestellt) unterbrochen, so dass das von der Probe 14 reflektierte oder gestreute Licht lediglich von Objektiv 5 aufgenommen wird und zur Abbildung der Probe 14 dient.

Von dem von der Lichtquelle 11 kommenden Beleuchtungslicht passiert nach Ablenkung durch das Ablenkelement 12 ein Strahlungsanteil den Strahlteiler/Strahlvereiniger 7 und gelangt über das Objektiv 5 zur Probe 14, während der übrige Strahlungsanteil vom Strahlteiler/Strahlvereiniger 7 zum Objektiv 6 hin gerichtet wird, jedoch wegen der Unterbrechung nicht durch das Objektiv 6 hindurch gelangt.

Die Objektebene 15 liegt in der von den Koordinaten X,Y aufgespannten Ebene, d.h. senkrecht zur Zeichenebene X,Z. Der Probentisch 13 ist beweglich so gelagert, dass er in Koordinatenrichtung X und/oder Y in die dargestellte Position eingeschwenkt oder eingeschoben werden kann. Optional können Mittel zur Positionsänderung des Probentisches 13 in der Koordinatenrichtung Z vorgesehen sein.

Die optische Baueinheit 4 ist mittels einer Geradführung und ineinandergreifender Antriebselemente so mit der Stativsäule 3 verbunden, dass ihre definierte Verschiebung in den Pfeilrichtungen P entlang der Stativsäule 3 vorgenommen werden kann. Die Antriebselemente sind beispielsweise in Form eines manuell zu betätigenden Ritzel-Zahnstangen-Triebes ausgebildet, vorzugsweise ist jedoch ein elektronisch ansteuerbarer Linearantrieb mit Statorelementen 16 an der Stativsäule 3 und Läufern (zeichnerisch nicht dargestellt) an der optischen Baueinheit 4 vorhanden. Selbstverständlich sind auch andere Antriebsvarianten vom Erfindungsgedanken eingeschlossen, wie z.B. Mutter-Spindel-Triebe, Piezo-Antriebe, Ultraschall-Antriebe oder induktiv wirkende Linearantriebe.

Die räumliche Lage und Ausrichtung der optischen Baueinheit 4 relativ zur Stativsäule 3 entspricht in Fig.1 einem Mikroskop der aufrechten Bauart.

Es sind Verbindungen der optischen Baueinheit 4 mit einer Ansteuer- und Bildauswerteeinrichtung vorgesehen, die im Stand der Technik üblich und deshalb hier nicht dargestellt bzw. und auch nicht näher erläutert sind.

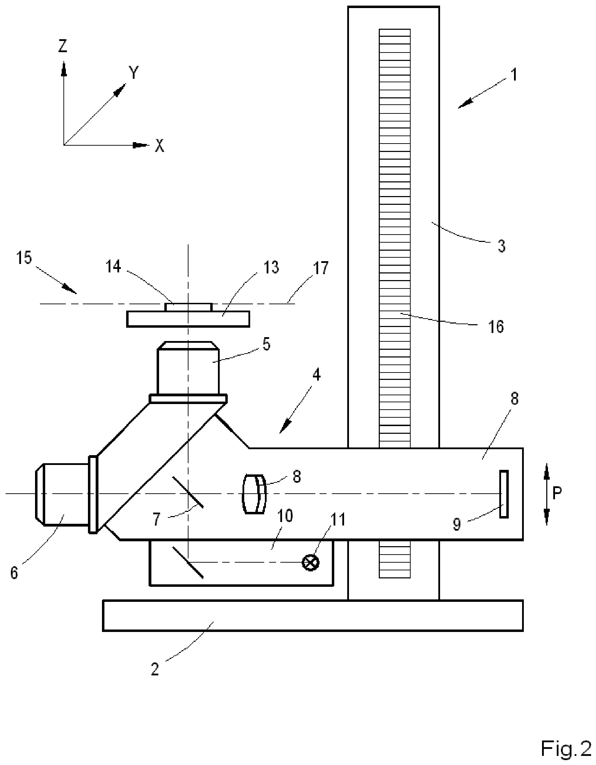

Erfindungsgemäß sind dieselben in Fig.1 dargestellten Komponenten auch für einen inversen Mikroskopaufbau nutzbar, wie nachfolgend anhand Fig.2 erläutert ist.

Um diese universelle Nutzbarkeit zu ermöglichen, sind die optische Baugruppe 4, die Stativsäule 3 und die Geradführung mit den ineinandergreifenden Antriebselementen an der Stativsäule 3 einerseits und der optischen Baugruppe 4 andererseits erfindungsgemäß so ausgelegt, dass der mikroskopische Aufbau in einfacher Weise durch bloße Drehung der optischen Baueinheit 4 um 180 Grad um eine in der Objektebene 15 liegende Achse 17 von aufrecht (vgl. Fig.1) zu invers (Fig.2) veränderbar ist. Auch in der inversen Konfiguration befindet sich das Objektiv 5 in Arbeitsposition und ist aktiv.

Die Umrüstung erfolgt beispielsweise, indem die optische Baugruppe 4 zunächst von der Stativsäule 3 bzw. der Geradführung und den Antriebselementen gelöst, um 180 Grad gedreht und dann wieder mit der Stativsäule 3 bzw. der Geradführung und den Antriebselementen verbunden wird. Der Probentisch 13 wird dabei vorübergehend ausgeschwenkt.

Mit dieser Anordnung ist die der Erfindung zugrunde liegende Aufgabe erfüllt, nämlich ein digitales Mikroskopsystem so weiterzuentwickeln, dass bei geringstem Aufwand für die Umrüstung sowohl die Nutzung als aufrechtes und auch als inverses Mikroskop möglich ist.

Fig.3 zeigt ein Ausführungsbeispiel, bei dem die bereits in Fig.1 und Fig.2 beschriebene optische Baueinheit 4 parallel zur Stativsäule 3 ausgerichtet und mittels einer Schwenkvorrichtung 18 und eines Schwenkantriebes 19 mit der Stativsäule 3 verbunden ist. Schwenkvorrichtung 18, Schwenkantrieb 19 und optische Baueinheit 4 sind gemeinsam in Pfeilrichtungen P entlang der Stativsäule 3 verschiebbar. Zu diesem Zweck sind Schwenkvorrichtung 18 und Schwenkantrieb 19 mittels einer Geradführung und ineinandergreifender Antriebselemente mit der Stativsäule 3 verbunden. Geradführung und Antriebselemente können ebenso wie bereits oben beschrieben ausgeführt sein.

Mittels der Schwenkvorrichtung 18 und des Schwenkantrieb 19 kann die optische Baueinheit 4 beispielsweise um einen Winkelbereich von ± 45 Grad um die Achse 17 aus der Zeichenebene heraus geschwenkt werden, so dass die Probe 14 seitlich aus einem Winkel innerhalb dieses Bereiches beobachtet werden kann.

Hier befindet sich das Objektiv 6 in Arbeitsstellung, während der Lichteinfall durch das Objektiv 5 durch eine Objektivabdeckung, einen Shutter oder eine in den Strahlengang eingeschobene Blende (zeichnerisch nicht dargestellt) unterbrochen ist, so dass das von der Probe 14 reflektierte oder gestreute Licht lediglich von Objektiv 6 aufgenommen wird. Die räumliche Lage und Ausrichtung der optischen Baueinheit 4 entspricht einem Mikroskop der aufrechten Bauart.

Anhand der Zusammenschau von Fig.1, Fig.2 und Fig.3 wird der Vorteil der flexiblen Verwendbarkeit der optischen Baueinheit 4 deutlich.

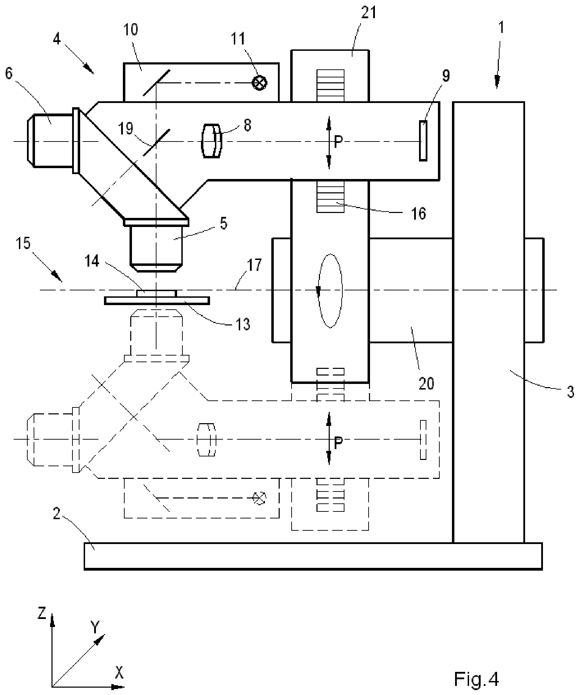

In Fig.4 ist eine weitere Ausführungsform des erfindungsgemäßen Digitalmikroskops beschrieben, bei der die optische Baueinheit 4 wie in Fig.1 und Fig.2 in Relation zur Stativsäule 3 ausgerichtet ist. Im Unterschied zu der Ausführung nach Fig.1 und Fig.2 ist hier jedoch keine manuelle Umrüstung vom aufrechten zum inversen Mikroskopaufbau oder umgekehrt vorgesehen, sondern die Stativsäule 3 ist mit einer Schwenkvorrichtung 20 ausgestattet, an der eine die optische Baueinheit 4 aufnehmende Führungssäule 21 um die in der Objektebene 15 liegende Achse 17 drehbar angeordnet ist.

Die in Fig.4 durch Volllinien dargestellte räumliche Lage und Ausrichtung der optischen Baueinheit 4 relativ zur Stativsäule 3 entspricht wie in Fig.1 einem Mikroskop der aufrechten Bauart. Die optische Baueinheit 4 ist in den Pfeilrichtungen P entlang der Führungssäule 21 verschiebbar, um den Arbeitsabstand bzw. die Fokussierung einstellen zu können, wobei zu diesem Zweck die optische Baueinheit 4 wiederum über Geradführung und ineinandergreifende Antriebselemente mit der Führungssäule 21 verbunden ist.

Wird ein inverser Mikroskopaufbau gewünscht, kann mittels der Schwenkvorrichtung 20 die optische Baueinheit 4 in die Position geschwenkt werden, die in Fig.4 durch unterbrochene Linien dargestellt ist. Die räumliche Lage und Ausrichtung der optischen Baueinheit 4 relativ zur Stativsäule 3 entspricht dann (wie auch in Fig.2) einem Mikroskop der inversen Bauart.

Bevorzugt ist diesbezüglich eine Ausgestaltung vorgesehen, bei der die optische Baueinheit 4 zwischen zwei Raststellungen schwenkbar ist, wobei sie sich in der ersten Raststellung in der Position der aufrechten, in der zweiten Raststellung in der Position der inversen Konfiguration befindet Die beiden Raststellungen entsprechen den Darstellungen in Fig.4.

Im Rahmen der Erfindung liegen dabei ausdrücklich auch Ausführungen, bei denen die optische Baueinheit 4 aus einer oder auch beiden dieser Raststellungen um einen vorgegebenen Winkelbereich von beispielsweise ± 45 Grad um die Achse 17 aus der Zeichenebene heraus geschwenkt werden kann, so dass die Probe 14 seitlich aus einem Winkel innerhalb dieses Bereiches beobachtet werden kann.

Wird darüber hinaus für bestimmte Proben 14 ein Beobachtungswinkelbereich von 360 Grad gewünscht, kann die Schwenkvorrichtung 20 auch so ausgelegt sein, dass jeder Betrachtungswinkel innerhalb dieses Bereiches einstellbar ist. Die Ausführung des Probentisches 13 bzw. einer sonstigen Probenaufnahme ist diesem Fall angepasst. Sollen beispielsweise unförmige bzw. unregelmäßig geformte Proben aus solch großem Beobachtungswinkelbereich betrachtet werden, ist z.B. eine Probenhalterung in Form einer Klemm- oder Spannvorrichtung vorgesehen. Für extrem große oder schwere Proben ist die Anordnung der optischen Baueinheit an einem Auslegerstativ, Portalstativ, Positioniersystem oder Roboterarm denkbar.

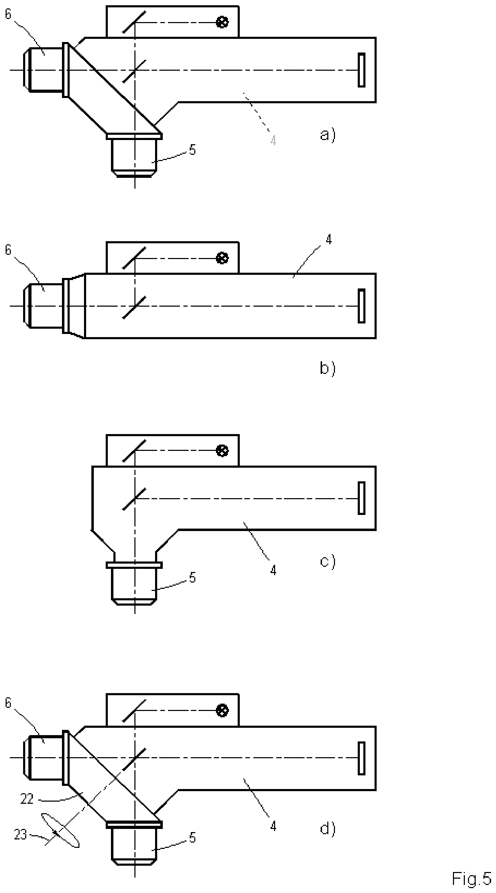

Fig.5 zeigt eine Auswahl von Ausführungen der optischen Baueinheit 4. Dargestellt ist der Übersichtlichkeit halber die optische Baueinheit 4 jeweils nur einzeln ohne Stativsäule 3 bzw. Schwenkvorrichtung 18 oder 20.

Fig.5a) zeigt die beispielsweise in Fig.1, Fig.2, Fig.3 und Fig.4 verwendete Ausführungsform. Fig5b) und Fig.5c) sind nicht erfindungsgemäße Varianten mit jeweils nur einem Objektiv, wobei die Variante nach Fig.5b) zur Verwendung für die in Fig.3 dargestellten Konfiguration, die Variante nach Fig.5c) zur Verwendung für die in Fig.1, Fig.2 und Fig.4 dargestellten Konfigurationen geeignet sind.

In einer nicht erfindungsgemäßen Variante nach Fig.5d) ist die optische Baueinheit 4 mit einem Objektivwechsler 22 ausgestattet, der zwei Objektive 5 und 6 trägt, die sich bezüglich ihres optischen Designs unterscheiden. Sie sind durch Drehung um die Achse 23 wahlweise in den Abbildungsstrahlengang mit Blick auf die Probe 14 zu stellen und stehen so jeweils für bestimmte Anwendungen zur Verfügung. Die Verwendung der Variante nach Fig.5d) ist in den Ausführungsbeispielen Fig.1 bis Fig.4 möglich, wobei der Abbildungsstrahlengang in Fig.1, Fig.2 und Fig.4 durch den Strahlteiler/Strahlvereiniger 7 abgelenkt ausgeführt ist, während in Ausführungsbeispielnach Fig.3 der Abbildungsstrahlengang den Strahlteiler/Strahlvereiniger 7 unabgelenkt passieren kann.

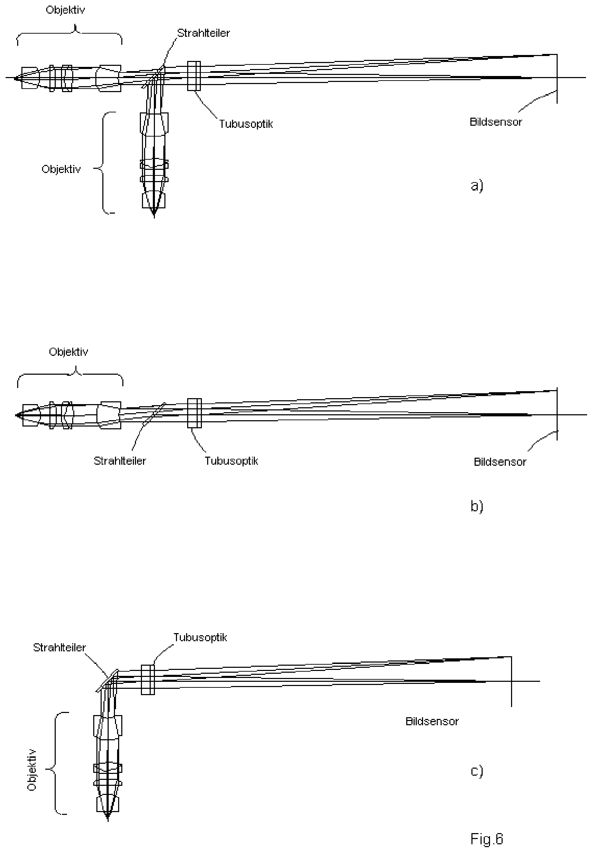

In Fig.6 sind verschiedene Varianten des Abbildungsstrahlengangs bzw. Varianten der Anordnung der den Strahlengang bildenden optischen Elemente dargestellt.

Davon ist die Variante von Fig.6a der Ausführungsform nach Fig.5a) zuzuordnen, die Variante Fig.6b) entspricht der Variante nach Fig.5b), und die Variante Fig.6c) entspricht der Variante nach Fig.5c).

Für die Variante nach Fig.5d) kommen sowohl die Variante Fig.6b) als auch die Variante Fig.6c) in Betracht.

### Bezugszeichenliste

- 1: Stativ
- 2: Grundplatte
- 3: Stativsäule
- 4: Baueinheit
- 5: Objektiv
- 6: Objektiv
- 7: Strahlteiler/Strahlvereiniger
- 8: Tubusoptik
- 9: Bildaufnahmeeinrichtung
- 10: Beleuchtungseinrichtung
- 11: Lichtquelle
- 12: Ablenkelement
- 13: Probentisch
- 14: Probe
- 15: Objektebene
- 16: Statorelemente
- 17: Achse
- 18: Schwenkvorrichtung
- 19: Schwenkantrieb
- 20: Schwenkvorrichtung
- 21: Führungssäule
- 22: Objektivwechsler
- 23: Achse

## Patentansprüche

1. Digitales Mikroskopsystem, umfassend
- mehrere Objektive (5, 6), eine Tubusoptik (8), eine digitale Bildaufnahmeeinrichtung (9), ein Stativ (1), eine Halterung für eine Probe (14) und eine Beleuchtungseinrichtung (10), wobei mehrere Objektive (5, 6), die Tubusoptik (8), die digitale Bildaufnahmeeinrichtung (9) und die Beleuchtungseinrichtung (10) zu einer kompakten optischen Baueinheit (4) zusammengefasst sind, und
- Mittel zum Verbinden der optischen Baueinheit (4) mit dem Stativ (1) in mehreren Verbindungsvarianten, die sich bezüglich der räumlichen Lage und Ausrichtung der optischen Baueinheit (4) relativ zum Stativ (1) und zur Probe (14) unterscheiden, wobei
- in einer ersten Verbindungsvariante die räumliche Lage und Ausrichtung der optischen Baueinheit (4) relativ zum Stativ (1) und zur Probe (14) einem aufrechten Mikroskop entspricht, und
in einer zweiten Verbindungsvariante die räumliche Lage und Ausrichtung der optischen Baueinheit (4) relativ zum Stativ (1) und zur Probe (14) einem inversen Mikroskop entspricht,
**dadurch gekennzeichnet, dass**
die optische Baueinheit (4) mit zwei Objektiven (5, 6) ausgestattet ist, die beide das gleiche optische Design haben, wobei
- einem ersten Objektiv (5) eine Arbeitsposition zugeordnet ist, bei welcher seine optische Achse mit der optischen Achse der Tubusoptik (8) einen Winkel von 90 Grad einschließt,
- einem zweiten Objektiv (6) eine Arbeitsposition zugeordnet ist, bei welcher seine optische Achse auf einer Geraden mit der optischen Achse der Tubusoptik (8) liegt, und
- im gemeinsamen Schnittpunkt der optischen Achse der Objektive (5, 6) und der Tubusoptik (8) ein Strahlteiler/Strahlvereiniger (7) vorgesehen ist.

2. Digitales Mikroskopsystem nach Anspruch 1, bei dem das Stativ (1) eine Geradführung für die optische Baueinheit (4) aufweist und ineinandergreifende Antriebselemente vorgesehen sind, ausgebildet zur Positionsänderung der optischen Baueinheit (4) am Stativ (1).

3. Digitales Mikroskopsystem nach Anspruch 1 oder 2, bei dem eine Einkopplung des Beleuchtungslichtes in den Abbildungsstrahlengang mittels des Strahlteilers/Strahlvereinigers (7) vorgesehen ist.

4. Digitales Mikroskopsystem nach einem der vorgenannten Ansprüche, ausgestattet mit Mitteln zur Variation des Abstandes zwischen dem jeweils aktiven Objektiv (5, 6) und einer Objektebene (15).

5. Digitales Mikroskopsystem nach einem der vorgenannten Ansprüche, bei dem die Beleuchtungseinrichtung (10) mindestens eine, vorzugsweise jedoch mehrere separat ein- und ausschaltbare LED's aufweist.

6. Digitales Mikroskopsystem nach Anspruch 5, mit einer ringförmigen, Licht abstrahlenden Fläche oder einer ringförmigen Anordnung mehrerer LED's, die konzentrisch zur optischen Achse des jeweils aktiven Objektivs (5, 6) angeordnet sind.

7. Digitales Mikroskopsystem nach einem der vorgenannten Ansprüche, bei dem mindestens ein Vergrößerungswechsler in den Abbildungsstrahlengang integriert ist.

8. Digitales Mikroskopsystem nach Anspruch 7, wobei der Vergrößerungswechsler axial verschiebbare optische Komponenten aufweist, die zum Zweck der Verschiebung vorzugsweise motorisch angetrieben sind.

9. Digitales Mikroskopsystem nach einem der vorgenannten Ansprüche, bei dem die Probenhalterung in Form eines in eine Objektebene (15) einschwenkbaren oder einschiebbaren Probentisches (13) ausgebildet ist.

10. Digitales Mikroskopsystem nach einem der vorgenannten Ansprüche, bei dem die optische Baueinheit (4) mit einer Ansteuereinrichtung und einer Bildauswerteeinrichtung verbunden ist.

## Claims

1. Digital microscope system, comprising
- several objective lenses (5, 6), a tube lens system (8), a digital image-acquisition device (9), a stand (1), a holder for a sample (14) and an illumination device (10), wherein several objective lenses (5, 6), the tube lens system (8), the digital image-acquisition device (9) and the illumination device (10) are combined in a compact optical unit (4), and
- means for connecting the optical unit (4) to the stand (1) in several connection variants which differ with respect to the spatial position and alignment of the optical unit (4) relative to the stand (1) and to the sample (14), wherein
- in a first connection variant the spatial position and alignment of the optical unit (4) relative to the stand (1) and to the sample (14) corresponds to that of an upright microscope, and
in a second connection variant the spatial position and alignment of the optical unit (4) relative to the stand (1) and to the sample (14) corresponds to that of an inverted microscope,
**characterized in that**
the optical unit (4) is equipped with two objective lenses (5, 6), which both have the same optical design, wherein
- a first objective lens (5) is assigned an operating position in which its optical axis forms an angle of 90 degrees with the optical axis of the tube lens system (8),
- a second objective lens (6) is assigned an operating position in which its optical axis lies in a straight line with the optical axis of the tube lens system (8), and
- a beam splitter/beam combiner (7) is provided in the common intersection point of the optical axes of the objective lenses (5, 6) and the tube lens system (8).

2. Digital microscope system according to claim 1, in which the stand (1) has a linear guide for the optical unit (4) and interlocking drive elements are provided, designed to change the position of the optical unit (4) on the stand (1).

3. Digital microscope system according to claim 1 or 2, in which a coupling of the illumination light into the imaging beam path is provided by means of the beam splitter/beam combiner (7).

4. Digital microscope system according to one of the preceding claims, equipped with means for varying the distance between the respectively active objective lens (5, 6) and an object plane (15).

5. Digital microscope system according to one of the preceding claims, in which the illumination device (10) has at least one, but preferably more than one, LED that can be switched on and off separately.

6. Digital microscope system according to claim 5, with an annular light-emitting surface or an annular arrangement of several LEDs which are arranged concentric to the optical axis of the respectively active objective lens (5, 6).

7. Digital microscope system according to one of the preceding claims, in which at least one magnification changer is integrated into the imaging beam path.

8. Digital microscope system according to claim 7, wherein the magnification changer has axially movable optical components, which are preferably motor-driven for the purpose of the movement.

9. Digital microscope system according to one of the preceding claims, in which the sample holder is designed in the form of a sample stage (13) that can be pivoted or moved into an object plane (15).

10. Digital microscope system according to one of the preceding claims, in which the optical unit (4) is connected to a control device and an image-evaluation device.

## Revendications

1. Système de microscope numérique, comprenant
- plusieurs lentilles d'objectif (5, 6), un système de lentille tubulaire (8), un dispositif d'acquisition d'image numérique (9), un socle (1), un porte-échantillon (14) et un dispositif d'éclairage (10), dans lequel plusieurs lentilles d'objectif (5, 6), le système de lentille tubulaire (8), le dispositif d'acquisition d'image numérique (9) et le dispositif d'éclairage (10) sont combinés dans une unité optique compacte (4), et
- un moyen de connexion de l'unité optique (4) au socle (1) dans plusieurs variantes de connexion qui diffèrent relativement à la position spatiale et à l'alignement de l'unité optique (4) par rapport au socle (1) et à l'échantillon (14), dans lequel
- dans une première variante de connexion la position spatiale et l'alignement de l'unité optique (4) par rapport au socle (1) et à l'échantillon (14) correspondent à ceux d'un microscope droit, et
dans une seconde variante de connexion la position spatiale et l'alignement de l'unité optique (4) par rapport au socle (1) et à l'échantillon (14) correspond à ceux d'un microscope inversé,
**caractérisé en ce que**
l'unité optique (4) est dotée de deux lentilles d'objectif (5, 6), qui ont toutes les deux la même conception optique, dans laquelle
- une première lentille d'objectif (5) est assignée à une position opérationnelle à laquelle l'axe optique forme un angle de 90 degrés avec l'axe optique du système de lentille tubulaire (8),
- une seconde lentille d'objectif (6) est assignée à une position opérationnelle à laquelle l'axe optique est en ligne droite avec l'axe optique du système de lentille tubulaire (8), et
- un diviseur/combineur de faisceaux (7) est fourni au point d'intersection commun des axes optiques des lentilles d'objectif (5, 6) et du système de lentille tubulaire (8).

2. Système de microscope numérique selon la revendication 1, dans lequel le socle (1) présente un guide linéaire pour l'unité optique (4) et des éléments d'entraînement d'interverrouillage sont fournis, conçus pour changer la position de l'unité optique (4) sur le socle (1).

3. Système de microscope numérique selon la revendication 1 ou 2, dans lequel un couplage de la lumière d'éclairage dans le chemin du faisceau d'imagerie est assuré au moyen du diviseur/combineur de faisceaux (7).

4. Système de microscope numérique selon l'une des revendications précédentes, équipé d'un moyen de variation de la distance entre la lentille d'objectif respectivement active (5, 6) et un plan d'objet (15).

5. Système de microscope numérique selon l'une des revendications précédentes, dans lequel le dispositif d'éclairage (10) comporte au moins une, mais de préférence plus d'une, DEL qui peut être allumée et éteinte séparément.

6. Système de microscope numérique selon la revendication 5, présentant une surface d'émission de lumière annulaire ou un agencement annulaire de plusieurs DEL qui sont agencées concentriquement à l'axe optique de la lentille d'objectif respectivement active (5, 6).

7. Système de microscope numérique selon l'une quelconque des revendications précédentes, dans lequel au moins un dispositif de modification de grossissement est intégré dans le chemin du faisceau d'imagerie.

8. Système de microscope numérique selon la revendication 7, dans lequel le dispositif de modification de grossissement comporte des composants optiques déplaçables axialement, dont le déplacement est de préférence motorisé.

9. Système de microscope numérique selon l'une quelconque des revendications précédentes, dans lequel le porte-échantillon est conçu en forme de platine à échantillon (13) pouvant être pivotée ou déplacée dans un plan d'objet (15).

10. Système de microscope numérique selon l'une quelconque des revendications précédentes, dans lequel l'unité optique (4) est connectée à un dispositif de commande et un dispositif d'évaluation d'image.
